# EUROPEAN PATENT APPLICATION

(11) **EP 4 449 839 A1**
(43) Date of publication of application: **23.10.2024**
(21) Application number: 23168552.0
(22) Date of filing: 18.04.2023
(51) Int. Cl.: A01B 33/02, B02C 18/18, A01B 49/06

(54) **IMPROVED SHREDDER FOR AGRICULTURAL MACHINERY**

(71) Applicant: Trust Dora, 66010 Miglianico (CH) (IT)
(72) Inventor: AURORA, Enrico, 66010 MIGLIANICO (CH) (IT)
(74) Representative: Baldi, Claudio

(57) **Abstract**

A shredder (A) for agricultural machinery (M), comprising a boxed supporting structure (2) that defines an operating chamber (20) together with a ground (T), a rotor (3) disposed inside the operating chamber (20), a plurality of tools (1) mounted around the rotor (3) in such a way to intercept and shred the material deposited on the ground (T) and/or to work the ground (T); each one of said tools (1) comprises a plowshare (1a, 1b) comprising a body (10), a first blade (13) that is disposed on an end side (102) of the body (10) and extends transversely with respect to the plane on which the body (10) of the plowshare (1a, 1b) lies, and a second blade (14) that extends along a front side (101) of the body (10) of the plowshare.

## Description

The present patent application for industrial invention relates to an improved shredder for agricultural machinery.

The field of reference is that of the agricultural machinery used for the shredding and chopping of vegetable products, such as grass, pruning residues (commonly called chips), branches and the like.

In particular, the present invention has been devised to improve the existing shredders that can be installed on tractors or other agricultural machinery.

A shredder of the prior art comprises a supporting structure (or supporting case) which defines an operating chamber with the ground below. The shredder comprises a rotor (also definable as a roller) arranged inside the operating chamber, supported by the supporting structure and mounted rotatably about its own axis. The axis of the rotor is substantially orthogonal to the forward direction of the tractor. A plurality of tools is mounted around the rotor, said tools being suitable for intercepting and chopping the material (grass, pruning residues, branches) placed on the ground. The supporting structure covers the top and the sides of the rotor in such a way as to protect the operators in the vicinity of the supporting structure from impacts with the material ejected by the shredder during operation. The rotor is driven into rotation by transmission means connected to a power take-off of the tractor.

A plurality of tool types is known to be mounted on said rotor.

In a first tool type said tools consist of knives.

Such knives only allow for chopping and shredding the material (grass, pruning residues and branches) deposited on the ground. Therefore the chopped and shredded material remains on the ground, and in order to work the ground and make it ready for sowing, it will be necessary to attach other equipment (such as harrows or the like) to the tractor to bury the shredded material, break up the clods and turn the ground so as to provide a good texture and structure of the seedbed.

There is a second tool type which comprises a plowshare that includes:
- a tapered half-moon sickle-shaped body having a base side connected to the rotor, and a tip arranged in a considerably advanced position with respect to that occupied by the base side; said sickle-shaped body comprises a concave front edge and a convex rear edge, which converge at the tip of the body;
- a blade mounted on the tip of the body; the blade comprises an outer face attached to the tip of the body, an inner face facing the rotor and a sharp front edge.

The concave front edge of the body has a first section that starts in a substantially radial direction from the rotor and a second section that is substantially aligned with said blade.

The shape of said concave front edge and the alignment of the second section of the front edge result in several limitations which will be described below.

If the blade is to enter with inclination in the forward direction of the agricultural machine, then the rotor is to be raised off the ground and the concave front edge of the body of the plowshare is unusable for working the ground. In particular, being basically orthogonal to the rotor and proximal to the rotor, the first section of the concave front edge would be extremely effective for working the ground. However, the first section of the concave front edge does not work the ground thus making the plowshare inefficient. Moreover, in such a case, since the rotor is raised at a high distance from the ground, the blade of the plowshare does not work the ground in depth.

If, on the other hand, the first section of the concave front edge is to penetrate the ground, increasing the depth of the furrow, there will be a problem with the orientation of the cutting edge of the blade, which would enter the ground while still facing in the opposite direction from the forward direction. If the blade impacts the ground with the cutting edge facing in the opposite direction from the forward direction, stress and bending are generated on the body of the plowshare which tend to distend and wear it over time. Therefore, in order to limit the stress discharged on the body, a blade with a width similar or identical to that of the body and in any case with a pointed, that is, sharp cutting edge is provided.

Such a type of narrow blade with a sharp cutting edge fails to pick up the ground, and therefore such plowshares are designed exclusively to make deep and narrow furrows and not to adequately move and turn the ground.

So whether one uses the tools of the first type or the tools of the second type, after chopping and shredding the ground, it will be necessary to pass over the ground again using other equipment to turn and work the ground to make it ready for sowing.

It is evident how having to go over the ground several times turns out to be an extremely time-consuming and costly solution.

There are also a third type of tools comprising a convex body with a convex front edge and a blade mounted at the end of the body. As the rotor rotates, the tool impacts the ground first with the convex front edge of the body and then with the blade. Such tools generate significant stresses on the rotor and therefore can only be used on soft or wet ground and not on dry or hard ground.

Another drawback that impairs the shredders of the prior art consists n the fact that the rotor must be rotated at high speeds to enable the tools to intercept, pick up and shred the material effectively and efficiently. This results in excessive power consumption, high wear on knives and high stresses on the supporting means of the rotor, which in turn result in high noise and wear on the supporting means.

Additionally, the arrangement of the knives in parallel rows causes the tools in the same row to impact simultaneously with the material to be shredded, resulting in vibrations and increased power demand at such impacts.

A careful observation of the aforementioned drawbacks has resulted in the present invention, which consists in a new shredder capable of overcoming such drawbacks.

Otherwise said, the purpose of the present invention is to devise a multifunctional shredder equipped with tools that are capable of both breaking up and turning the ground properly.

A further purpose of the present invention is to devise a shredder such as the one described above that is also capable of fertilizing the ground.

Another purpose is to devise a shredder that is capable of shredding and working the ground at low speeds.

Finally, the last purpose of the present invention is to devise a shredder capable of reducing the vibrations that occur during the operation of the shredder.

These purposes are achieved in accordance with the invention with the features listed in the attached independent claim 1.

Advantageous achievements appear from the dependent claims.

The shredder according to the invention is defined by claim 1.

For explanatory clarity, the description of the shredder according to the invention continues with reference to the attached drawings, which are for illustrative and non-limiting purposes only, wherein:
Fig. 1 is a schematic side view of a shredder according to the invention hauled by an agricultural machine;
Fig. 1A is a perspective view of an agricultural machine that hauls the shredder;
Fig. 2 is a perspective view of a part of the shredder according to the invention, wherein the supporting structure of the shredder is open to see the inside of the operating chamber of the supporting structure;
Fig. 2A is a sectional view of a part of the shredder;
Fig. 2B is a rear perspective view of a plowshare attached to a boxed body protruding radially from the rotor;
Fig. 3 is a side view of a first embodiment of a plowshare of the shredder according to the invention;
Fig. 3A is a front view of the plowshare of Fig. 3;
Fig. 3B is a view of the plowshare of Fig. 3 seen from the base side;
Fig. 3C is a schematic side view of the rotor around which multiple plowshares of Fig. 3 are applied;
Fig. 3D is a sectional view of the plowshare of Fig. 3 taken along the plane D3-D3;
Fig. 4 is a side view of a second embodiment of a plowshare of the shredder according to the invention;
Fig. 4A is a front view of the plowshare of Fig. 4;
Fig. 4B is a view of the plowshare of Fig. 4 seen from the base side;
Fig. 4C is a schematic side view of the rotor around which multiple plowshares of Fig. 4 are applied;
Fig. 4D is a sectional view of the plowshare of Fig. 4 taken along the plane D4-D4;
Fig. 4E is a side view of the plowshare of Fig. 4 in which the second blade and the body of the plowshare are made in one piece;
Fig. 5 is an axonometric view of a first embodiment of the rotor, wherein the groups of plowshares are not staggered in such a way that straight rows of plowshares are generated along the rotor;
Fig. 6 is an axonometric view of a second embodiment of the rotor, wherein the groups of plowshares are staggered in such a way that helical rows of plowshares are generated along the rotor.

With reference to the attached Figures, a shredder according to the invention is described, it being comprehensively denoted by the reference letter (A).

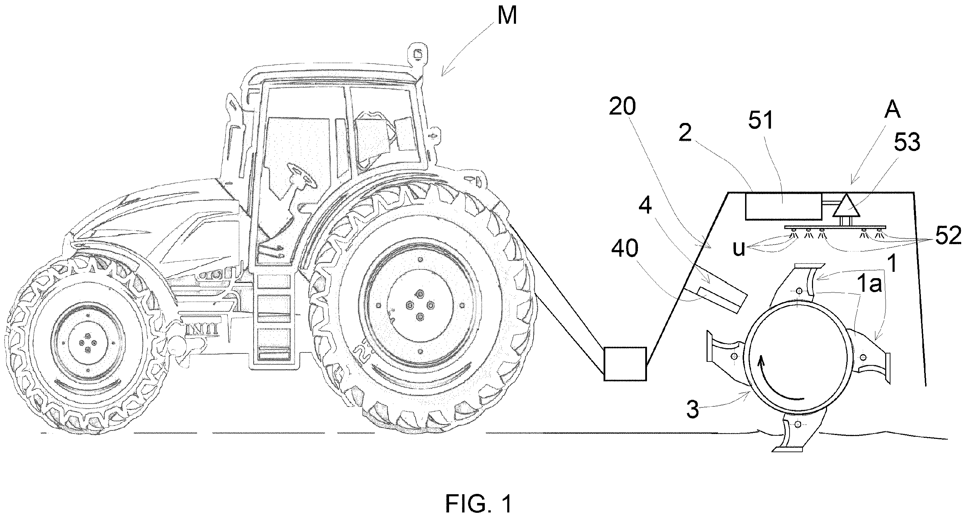

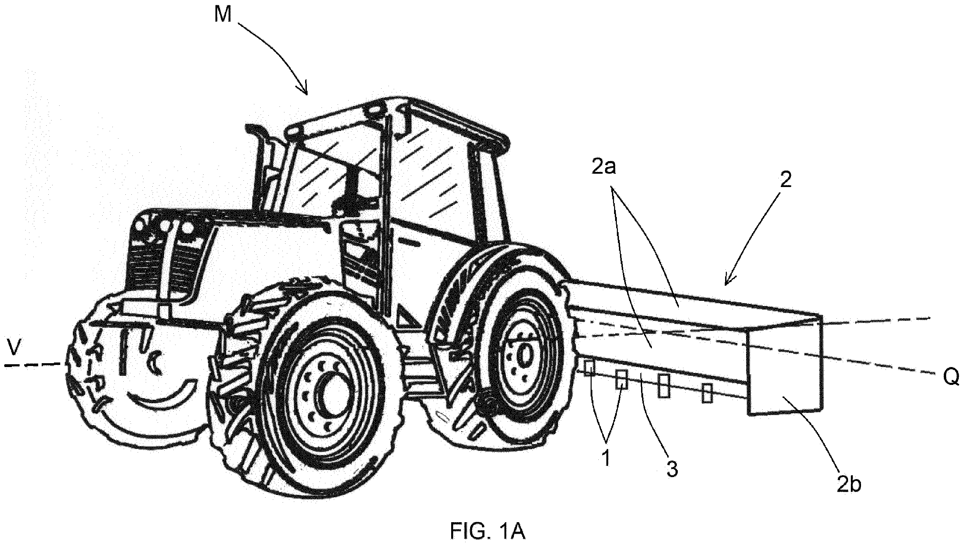

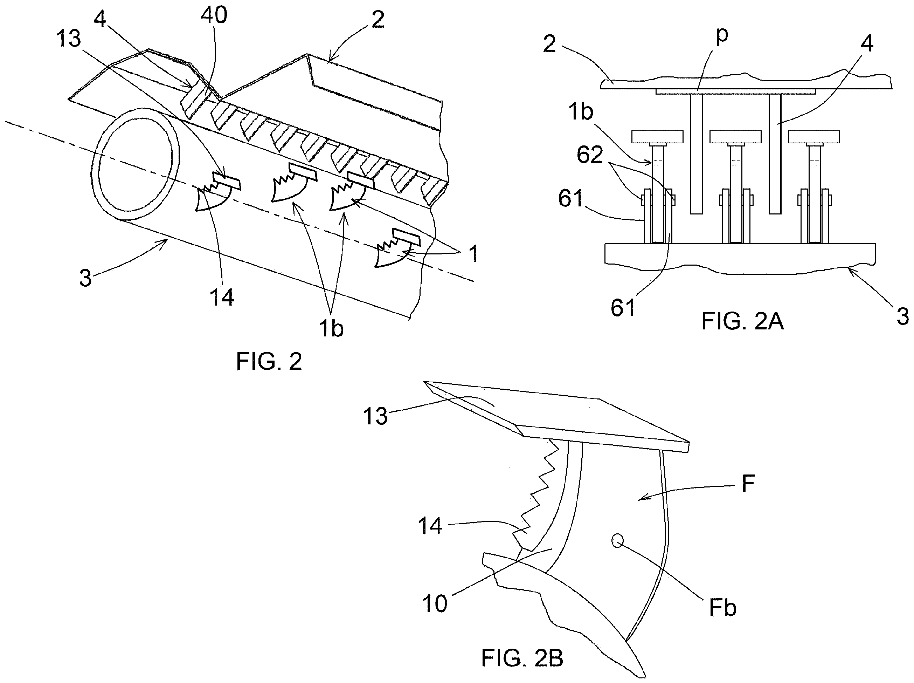

The shredder (A) according to the invention is suitable for being preferably connected to an agricultural machine (M) (e.g., a tractor), as shown in Figs. 1 and 2.

The shredder (A) is connected to a rear joint of the agricultural machine (M) and is suitable for being hauled by the agricultural machine (M).

The shredder (A) comprises conventional power transmission means (not shown in the attached Figures) coupled with a drive shaft of the agricultural machine (M) via a transmission joint, such as a universal joint, to receive the power necessary for its operation.

The shredder (A) comprises a boxed supporting structure (2) having a plurality of walls that, together with a ground (T) below, define an operating chamber (20) wherein the shredder (A) operates by shredding and crushing the material deposited on the ground (T).

The operating chamber (20) is enclosed laterally, frontally, on the back, and at the top in order to prevent the material from being thrown and ejected outwards, with the risk of hitting and injuring the operators in the vicinity of the shredder (A).

In particular, the boxed supporting structure (2) comprises a sheet metal (2a) that defines the top, the front, and the back of the operating chamber (20) and side edges (2b) that define the operating chamber (20) laterally.

The supporting structure extends along a transverse direction (Q), preferably orthogonal to the forward direction (V) of the agricultural machine (M).

The shredder (A) comprises a rotor (3) that rotates about its own axis (X), connected to the boxed supporting structure (2) and arranged inside the operating chamber (20).

The rotor (3) is oriented in the same manner as the supporting structure, in such a way that also the axis (X) of the rotor (3) is transverse, preferably orthogonal, to the forward direction (V) of the agricultural machine (M).

In the preferred embodiment of the invention, the rotor (3) is internally hollow (in order to save weight and material), i.e., it consists of a tubular element with a circular section, supported at the ends by the side edges (2b) by means of rotatable supporting means that are not shown in the attached figures since they are known to a technician of the field, such as for example bearings. The provision of the hollow rotor (3) allows to reduce the weight of the entire shredder (A).

The shredder (A) further comprises a plurality of tools (1) mounted around the rotor (3), which extend radially with respect to the rotor (3) to intercept and shred the material deposited on the ground (T) and/or to work the ground (T).

The tools (1) comprise plowshares (1a, 1b).

Each plowshare (1a, 1b) comprises a plate-like body (10) substantially shaped like a fin having a front side (101), an end side (102), a back side (103) and a base side (104) conforming to the curvature of the outer surface of the rotor (3) so that said base side (104) is perfectly abutting the outer surface of the rotor (3). A median axis (Y), which passes through the body (10) at a position interposed between the front side (101) and the back side (103) and is radial to the rotor (3), can be identified on the body (10).

Each plowshare (1a, 1b) further comprises a first blade (13) that is arranged on the end side (102) and extends orthogonally with respect to the plane on which the body (10) of the plowshare (1a, 1b) lies. Preferably said first blade (13) consists of a flat plate.

The first blade (13) has an inner face (135) facing the rotor (3) and attached to the end face (102) of the body (10), an outer face (136) parallel and opposite the inner face (135), and a cutting front edge (137). When seen from the front, the cutting front edge (137) is rectilinear and is not pointed.

The rectilinear cutting front edge (137) is connected to the inner face (135) by an inner edge (138) and is connected to the outer face (136) by an outer edge (130). The outer edge (130) is set forward relative to the inner edge (138).

More precisely, at the inner edge (138), said inner face (135) and said cutting front edge (137) define an obtuse inner angle (β) whereas, at the outer edge (130), said cutting front edge (137) and said outer face (136) define an acute inner angle (γ).

The first blade (13) has a width (L3) that is at least three times greater than the width (L1) of the body of the plowshare (1a, 1b).

The plowshare (1a, 1b) also comprises a second blade (14) that extends along the front side (101) of the body (10) of the plowshare (1a; 1b).

The second blade (14) has a cutting edge (14a, 14b) that is concave with respect to the direction of rotation of the rotor and is set back relative to the cutting front edge (137) of the first blade (13). The cutting front edge (14a, 14b) has a first end (141) close to the base side (104) and a second end (142) arranged below the first blade (13) near the cutting front edge (137) of the first blade (13).

The cutting edge (14; 14b) of the second blade (14) extends along an arc of circumference for an angle comprised between 20° and 40°. Both ends (141, 142) of the cutting edge (14a, 14b) lie on a straight line (R) that is incident and approximately orthogonal to the first blade (13).

The body (10), the first blade (13) and the second blade (14) are preferably made of a wear-resistant material.

Each plowshare (1a, 1b) is removably connected to the rotor (3) by means of connecting means.

Referring to Fig. 2A, the connecting means comprise:
- two parallel, opposite plates (61) protruding radially from the rotor (3) between which the body (10) of the plowshare (1a, 1b) is positioned;
- a bolt (62) or threaded connecting means passing through aligned holes of the plates (61) and of the body (10) of the plowshare (1a, 1b) so as to connect the plowshare (1a, 1b) to the two plates (61).

Alternatively, with reference to Fig. 2B, the connecting means may comprise a boxed body (F) welded to the outer face of the rotor (3) wherein said body (10) of the plowshare is inserted, preferably by force. In particular, the boxed body (F) comprises two side walls that cover two opposite side walls of the body (10) of the plowshare and a back wall conforming to the back side (103) of the plowshare that covers the back side (103) of the plowshare.

To ensure a stable connection of the plowshare to the boxed body (F), the connecting means also comprise threaded connecting means (Fb), such as a bolt, threaded into holes drilled in the body (10) of the plowshare and on the side walls of the boxed body (F).

The version shown in Fig. 2B is a safer and more reliable solution than the solution shown in Fig. 2A. In fact, in the version of Fig. 2B, the force acting on the plowshare during the impact with the ground is discharged on the entire boxed body (F) and not exclusively on the bolt or on the threaded connecting means.

Because of the provision of the connecting means, the plowshares (1a, 1b) are interchangeable and easily replaceable.

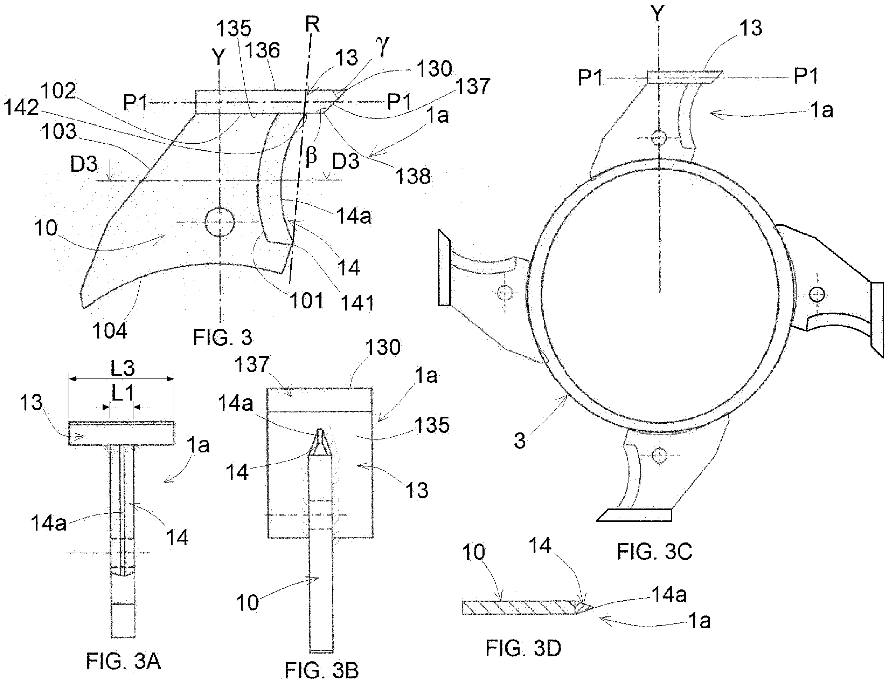

Now with reference to Figs. 3 to 4D two different alternative embodiments of the plowshare (1a, 1b) will be described.

Figs. 3, 3A, 3B, 3C and 3D show the plowshare (1a) according to its first embodiment.

With reference to Figs. 3 and 3C, in said first embodiment, the plowshare (1a) has the first blade (13) lying on a plane (P1-P1) that is orthogonal to the median axis (Y) of the body (10) of the plowshare (1a).

With reference to Fig. 3A, in such a construction version, when viewed from the front, the plowshare (1a) has a substantially T-shape.

Referring to Fig. 3, in said first embodiment, the second blade (14) of the plowshare (1a) has the cutting edge (14a) longitudinally provided with a smooth profile.

Also, referring to Fig. 3D, when viewed in cross-section, the cutting edge (14a) is sharp.

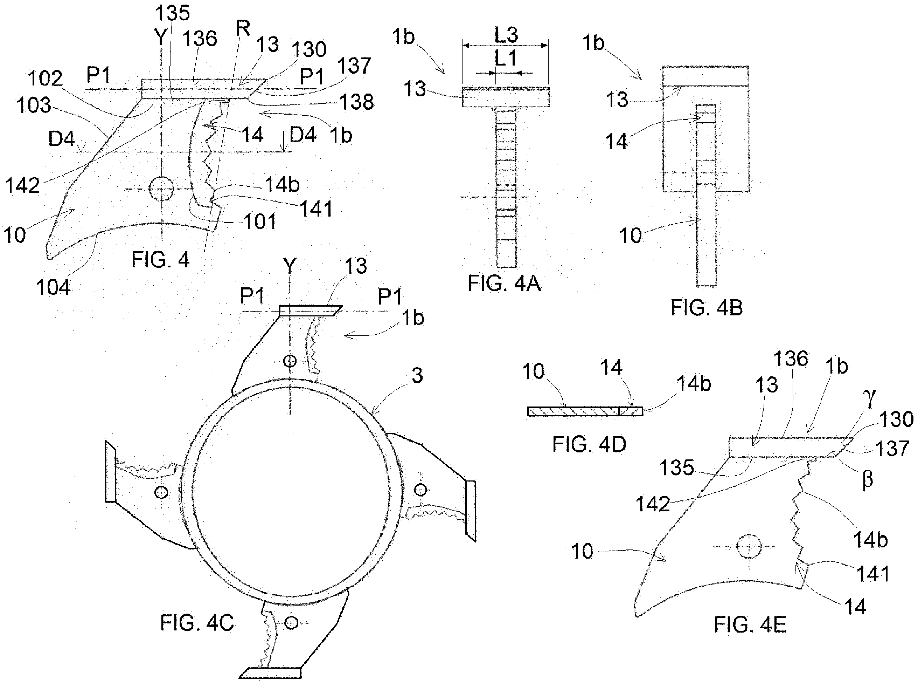

Figs. 4, 4A, 4B, 4C , 4D and 4E show the plowshare (1b) according to a second embodiment.

With reference to Figs. 4 and 4C, in said second embodiment, the plowshare (1b) has the first blade (13) lying on a plane (P1-P1) that is orthogonal to the median axis (Y) of the body (10) of the plowshare (1b).

With reference to Fig. 4A, when viewed from the front, the plowshare (1b) has a substantially T-shape.

With reference to Fig. 4, in said second embodiment, the second blade (14) of the plowshare (1b) has that has the same thickness as the body (10) and has a cutting edge (14b) longitudinally provided with a toothed profile.

As shown in Fig. 4D, when viewed in cross-section, the cutting edge (14b), of the plowshare (1b) of the second type is flat.

With reference to Fig. 4 and 4E, in such embodiment of the plowshare (1b), the second blade (14) can be attached to the body (10) by means of welding (see Fig. 4) or it can be made in one piece with the body (10) (see Fig. 4E).

Furthermore, although in all the attached figures (except Fig. 4E) the blades (13, 14) are always made in one piece separate from the body (10), in alternative versions of the invention said blades (13, 14) can also be made in one piece with the body (10).

Returning to Figs. 1, 2 and 2A, the shredder (A) also comprises a plurality of fixed knives (4) attached to the boxed supporting structure (2) that cooperate with the ploughshares (1a, 1b) in order to improve the shredding and working of the material.

The fixed knives (4) protrude inside the operating chamber (20) and are arranged either along a single row parallel to the axis (X) of the rotor (3) or along several rows parallel to each other and also parallel to the axis (X) of the rotor (3).

Such fixed knives (4) have a cutting edge (40) opposed to the blades (13, 14) of the plowshares (1a, 1b) according to a forward direction of the plowshares (1a, 1b) given by the rotation of the rotor (3).

Preferably, the fixed knives (4) are connected to the boxed supporting structure (2) in a removable manner so that they can be replaced with other fixed knives (4) when the cutting edge (40) is worn out.

Specifically, as shown schematically in Fig. 2A, said fixed knives (4) can be connected to the boxed supporting structure (2) via a single attachment plate (p) to which the fixed knives (4) are connected. The attachment plate is connected to the boxed supporting structure (2) by means of threaded connecting means, such as bolts.

The fixed knives (4) can be connected to the attachment plate (p) by welding or by other fixing means known to a technician of the field.

When the fixed knives (4) are worn out, it is possible to disconnect the attachment plate (p) and attach a new plate with fixed knives (4).

The fixed knives (4) are positioned inside the operating chamber (20) in such a way that during the rotation of the rotor (3) the ploughshares (1a, 1b) pass close, almost brushing against said fixed knives (4), producing a scissor-like action such to shred and cut the material that is taken up by the ploughshares (1a, 1b) and brought inside the operating chamber (20). Therefore, during shredding, the material is picked up and lifted from the ploughshares (1a, 1b) and brought inside the operating chamber (20), and when the ploughshares (1a, 1b) pass in the vicinity of the fixed knives (4) the scissor-action takes place, allowing the material to be shredded and cut up effectively and efficiently.

Referring to Fig. 1, said shredder (A) also comprises a fertilizer dispensing system mounted on the boxed supporting structure (2) and arranged inside the operating chamber (20). The fertilizer dispensing system is configured to dispense a fertilizer substance (u) onto the ground.

The fertilizer dispensing system comprises:
- a container (51) with the fertilizer substance (u); the container (51) is shown schematically in Fig. 1 with a rectangle;
- dispensers (52) suitable for dispensing the fertilizer substance (u) onto the ground;
- means (53) (shown schematically in Fig. 1 with a triangle) that take the fertilizer substance (u) from the container (51) and forcedly push it toward the dispensers (52).

The fertilizer substance (u) can be either in liquid form or in solid form of grains or granules.

In the case where the fertilizer substance is a liquid, the dispensers (52) consist of nozzles and the means consist of a pump that draws the liquid from the container (51) and pumps it toward the nozzles so that the fertilizer substance in liquid form is dispensed from the nozzles.

In the case where the fertilizer substance is a granular solid, the nozzles (51) consist of dispensing nozzles and the means consist of an aspirator that draws the granules from the container (51) and forcedly conveys them towards the dispensing nozzles so that the fertilizer substance in granule or grain form is dispensed from the dispensing nozzles.

The plowshares (1a, 1b) are grouped into groups of plowshares along the rotor (3).

The plowshares belonging to the same group lie on the same plane orthogonal to the axis (X) of the rotor (3) and are angularly equally spaced.

In the solution shown in the attached figures, each group of plowshares comprises four plowshares that are equally spaced by an angle of 90°.

Alternatively, each group of plowshares may comprise three plowshares that are equally spaced by an angle of 120°.

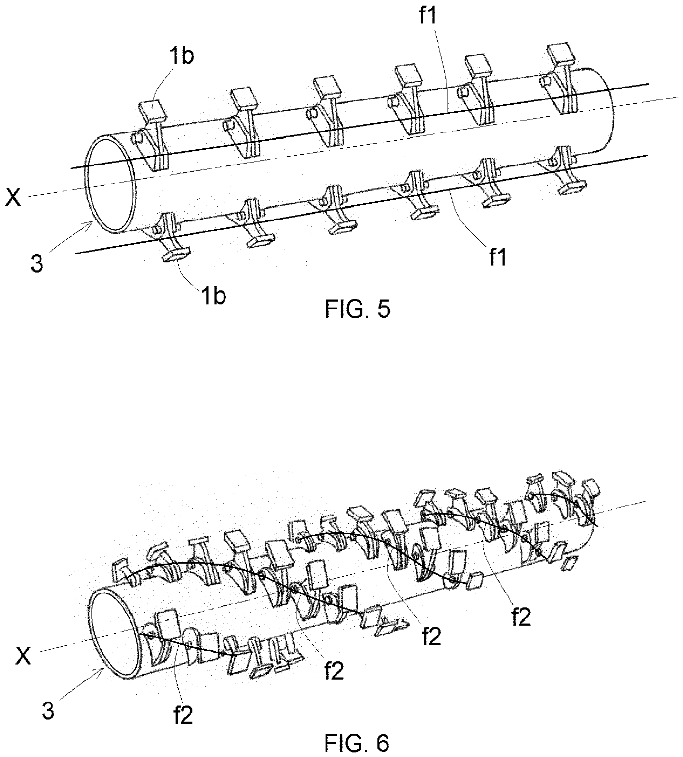

In a first embodiment of the shredder (A) shown in Fig. 5, the groups of plowshares can all be oriented in the same manner along the rotor (30), so that straight rows (f1) are generated along the rotor (30), extending for the entire length of the rotor (30).

In a second and preferred embodiment of the rotor (30) shown in Fig. 6, each group of ploughshares is staggered with respect to the adjacent group of ploughshares in such a way that helical rows (f2) are generated along the rotor (30).

The second version of the rotor (30) with helical rows (f2) of plowshares (1a, 1b) allows for a more gradual and homogeneous contact with the ground than in the case with the rectilinear rows of plowshares (1a, 1b) because of a more continuous and progressive contact of the plowshares with the material to be shredded.

It should be noted that, that although a single rotor (3) arranged inside the operating chamber (20) is shown in the attached figures, the shredder (A) may be equipped with two or more rotors (3) arranged inside the operating chamber (20), all parallel to each other and cooperating with each other.

In such a case, the groups of plowshares arranged along a rotor (3) will be arranged on staggered planes relative to the groups of plowshares arranged on the other rotor so that during the rotation of the two rotors, the plowshares will not interfere with each other and will rather cooperate with each other to perform a scissor-like action similar to that which has been described above and which occurs between the plowshares and the fixed knives.

As a result of the foregoing description, the advantages brought by the present invention now become apparent.

First of all, the tools (1), consisting of ploughshares (1a, 1b) having a first blade (13) that extend transversely to the body (10) and a second blade (14) that extend along the front side (14) of the body (10) are extremely more efficient than the known tools, and they are also able to penetrate deeply into the ground to pick up and transport the ground inside the chamber (to break it up and shred it), and bury it again together with the material deposited on the ground (grasses, chips, branches, and the like).

In fact, the particular configuration of the first blade (13), with the cutting front edge (137) that is advanced toward the upper edge (130) and has a width (L3) that is considerably greater than the width (L1) of the body (10), enables it to operate as a scoop that collects the shredded and broken ground to transport it inside the operating chamber (10). Specifically, when the first blade (13) impacts the ground to break it up, the broken ground slides along the cutting front edge (137) from the upper edge (130) to the lower edge (138) and then flows onto the inner face (135) of the first blade (13) in such a way that when the first blade (13) emerges from the ground, it manages to transport a considerable amount of ground inside the operating chamber (20) of the boxed supporting structure (2).

Moreover, it should be pointed out that the particular configuration and geometry of the second concave blade (14) with the second end (142) of the cutting edge (14a, 14b) near the cutting front edge (137) of the first blade (13) allows the cutting edge (14a, 14b) of the second blade (14) to operate just behind the cutting front edge (137) of the first blade (13) so that it can further cut and shred the material while it is transported to the operating chamber.

As a result of the above description, one can also understand the enormous difference of the tools of the shredder according to the invention with respect to the known tools of the second type, in which the body had a concave front edge starting at the back of the blade aligned with it, and ending with a section near the rotor that went in contact with the ground long after the cutting edge of the blade had intercepted the ground, thus not contributing to working simultaneously with the blade. On the contrary, in the plowshare (1a, 1b) of the shredder according to the invention, the two cutting edges (137, 14a, 14b), that of the first blade (13) and that of the second blade (14), cooperate almost simultaneously to intercept the ground with a sort of upside-down T-shaped cutting edge in order to crush, break up and lift a portion of ground as wide as the first blade.

Thus, along with an effective shredding of the material deposited on the ground, the new shredder (A) also allows for shredding and turning the ground (T).

Additionally, in addition to shredding and turning the ground, the provision of the fertilizer dispensing system also makes it possible to fertilize the ground.

So, by using the shredder (A) according to the invention, it is possible to go over the ground only once, performing the following actions at the same time:
- Shredding of weeds, branches, woods and similar materials;
- Turning over and shredding of the ground;
- Burying of the shredded weeds, branches and woods; and
- Fertilization of the ground.

It is evident how such a solution is extremely less expensive and more convenient than the solutions of the prior art which (as described earlier) require to go over the ground several times with different equipment to make the ground ready for sowing.

So the shredder (A) according to the invention is multifunctional and also operates as tillage, turning and fertilization equipment.

Another advantage is that of the effectiveness of the shredding process achieved by means of the cooperation of the plowshares with the fixed knives. In fact, because of such a cooperation, the aforementioned scissor-like action is obtained, which enables an extremely fine and efficient shredding of the material and the ground.

Finally, another advantage is obtained when the plowshares are distributed in helical rows (f2) along the rotor. In fact, in such case a more homogeneous operation of the shredder (A) is obtained, which significantly reduces the power to be delivered to the rotor.

In fact, in the version with the plowshares distributed in a helical pattern, fewer plowshares impact the ground at the same time than in the case of plowshares distributed along straight rows.

Finally, it is important to point out that, because of the different types and of the easy interchangeability of the plowshares, said shredder (A) is versatile and suitable for being used with different types of ground and materials.

Numerous variations and modifications may be made to the present embodiment of the invention, within the skills of an expert of the field, and still within the scope of the invention as expressed by the appended claims.

## Claims

1. Shredder (A), particularly for agricultural machinery (M), comprising:
- a boxed supporting structure (2) that is open at the bottom and defines an operating chamber (20) together with a ground (T);
- a rotor (3) revolving about its own axis (X) which is connected to the boxed supporting structure (2) and is disposed inside the operating chamber (20);
- a plurality of tools (1) mounted around the rotor (3) that extend radially with respect to the rotor (3) in order to intercept and shred the material deposited on the ground (T) and/or to work the ground (T);
wherein each one of said tools (1) comprises a plowshare (1a, 1b) comprising:
- a body (10) having a front side (101), an end side (102), a rear side (103) and a base side (104); and
- a first blade (13) that is disposed on the end side (102) and extends orthogonally with respect to the plane whereon the body (10) of the plowshare (1a, 1b) lies; wherein said first blade (13) comprises an inner face (135) facing the rotor (3), an outer face (136) opposite to said inner face (135), and a cutting front edge (137);
**characterized by** the fact that:
- said inner face (135) of the first blade (13) is attached to the end face (102) of the body (10);
- said cutting front edge (137) is straight and not pointed when viewed from the front;
- said plowshare (1a, 1b) comprises a second blade (14) that extends along the front side (101) of the body (10) of the plowshare (1a, 1b); said second blade (14) having a cutting edge (14a, 14b) that is concave with respect to the direction of rotation of the rotor and is set back relative to the cutting front edge (137) of the first blade (13).

2. The shredder (A) according to claim 1, wherein the cutting edge (14a, 14b) of the second blade (14) has a first end (141) disposed in proximity to the base side (104) and a second end (142) disposed below the first blade (13) and in proximity to the cutting front edge (137) of the first blade (13).

3. The shredder (A) according to claim 1 or 2, wherein said cutting front edge (137) is connected with said inner face (135) by means of an inner edge (138) and with said outer face (136) by means of an outer edge (130) that is set forward relative to the inner edge (138).

4. The shredder (A) according to any one of the preceding claims, wherein said cutting edge (14a, 14b) extends along an arc of a circumference (C) for an angle comprised between 20° and 40°.

5. The shredder (A) according to any one of the preceding claims, wherein said body (10) has a width (L1); wherein said first blade (13) has a width (L3) that is greater than at least three times the width (L1) of the body (10).

6. The shredder (A) according to any one of claims 2 to 5, wherein both ends (141, 142) of the cutting edge (14a, 14b) lie on a straight line (R) that is incident and approximately orthogonal to the first blade (13).

7. The shredder (A) according to any one of the preceding claims, wherein the body (10) has a median axis (Y) that passes through the body (10) at a position interposed between the front side (101) and the rear side (103) and is radial to the rotor (3); wherein said first blade (13) of the plowshare (1a, 1b) lies on a plane (P1-P1) orthogonal to the median axis (Y) of the body (10) of the plowshare (1a, 1b).

8. The shredder (A) according to any one of the preceding claims, wherein said first blade (13) consists of a flat plate.

9. The shredder (A) according to any one of the preceding claims, wherein the cutting edge (14a) of the second blade (14) of the plowshare (1a) has a smooth profile.

10. The shredder (A) according to any one of claims 1 to 8, wherein the cutting edge (14b) of the second blade (14) of the plowshare (1b) has a toothed profile.

11. The shredder (A) according to any one of the preceding claims, comprising a plurality of fixed knives (4) attached to the boxed supporting structure (2) and positioned inside the operating chamber (20) in such a manner that during the rotation of the rotor (3) the plowshares pass close to said fixed knives (4), almost brushing against them and producing a scissor-like action such as to shred and cut the material.

12. The shredder (A) according to any one of the preceding claims, comprising a fertilizer dispensing system mounted on the boxed supporting structure (2) and configured to dispense a fertilizer (u) onto the ground (T).

13. The shredder (A) according to any one of the preceding claims, wherein the ploughshares (1a, 1b) are grouped along the rotor (3) in groups of ploughshares; wherein the ploughshares forming part of the same group of ploughshares lie on the same plane orthogonal to the axis (X) of the rotor and are angularly equally spaced.

14. The shredder (A) according to claim 13, wherein each group of plowshares is staggered with respect to the adjacent group of plowshares in such a way that the plowshares are distributed along the rotor (30) along helical rows (f2).
